# EUROPÄISCHE PATENTSCHRIFT

(11) **EP 3 514 428 B1**
(45) Veröffentlichungstag und Bekanntmachung des Hinweises auf die Patenterteilung: **23.10.2024**
(21) Anmeldenummer: 18152343.2
(22) Anmeldetag: 18.01.2018
(51) Int. Cl.: F16K 31/60, F16K 35/02

(54) **HANDHEBEL**
HAND LEVER
LEVIER À MAIN

(43) Veröffentlichungstag der Anmeldung: 24.07.2019
(73) Patentinhaber: Georg Fischer Rohrleitungssysteme AG, 8201 Schaffhausen (CH)
(72) Erfinder: Hunnekuhl, Jörg, 79798 Jestetten (DE); Jäckle, Timo, 78247 Hilzingen (DE); Bürgi, Stefan, 8254 Basadingen (CH); Lalevic, Novica, 8180 Bülach (CH)
(74) Vertreter: Fenner, Seraina

(56) Entgegenhaltungen:
- WO-A1-2008/105056
- US-A1- 2012 261 602
- US-B1- 9 797 522

## Beschreibung

Die Erfindung betrifft einen Handhebel vorzugsweise aus Kunststoff zum Betätigen eines Ventils vorzugsweise einer Absperrklappe oder eines Kugelhahns enthaltend einen Hebel und eine Feststellplatte, wobei der Hebel ein Feststellelement und ein Hebeloberteil aufweist, wobei am Hebeloberteil ein Befestigungselement zur Befestigung am Ventil und zur Verbindung mit der Feststellplatte angeordnet ist und die Feststellplatte eine Aufnahmeöffnung zur Aufnahme des Befestigungselements aufweist.

Mit Hilfe eines Handhebels können Ventile geöffnet oder geschlossen werden bzw. auch nur teilweise geöffnet werden. In der Regel wird durch das Betätigen des Handhebels der Abschlusskörper im Ventilgehäuse gedreht um die Durchflussmenge zu regulieren. Meist werden solche Handhebel für Abschlussklappen eingesetzt da solche zum Betätigen einen höheren Kraftaufwand erfordern. Handhebel sind aber auch für Kugelhähne denkbar oder andere Ventile die maximal eine Umdrehung um die Achse des Abschlusskörpers benötigen und keine Mehrfachumdrehung des Abschlusskörpers verlangen.

Die WO2008105056 offenbart einen solchen Handhebel zur Betätigung einer Absperrklappe, wobei nachteilig daran ist, dass eine Vielzahl an Einzelteilen zur Montage notwendig sind und Schraubenköpfe hervorstehen die eine Verletzungsgefahr bilden.

Die US 2012/261602 A1 offenbart einen weiteren Handhebel.

Die EP 0 702 177 A1 offenbart eine Absperrklappe mit einem Handhebel der sich einerseits stufenweise über eine Verrasterung verstellen lässt und andererseits auch stufenlos. Nachteilig hierbei ist, dass der Hebel viele herausragende Kanten aufweist die eine Verletzungsgefahr bilden.

Es ist Aufgabe der Erfindung einen Handhebel vorzuschlagen der zur Vermeidung von Verletzungen keine herausragenden Schrauben oder scharfe Kanten aufweist und eine einfache, schnelle und zuverlässige Montage am Ventil ermöglicht.

Diese Aufgabe wird erfindungsgemäss dadurch gelöst, dass die Aufnahmeöffnung oval ausgebildet ist und das Befestigungselement eine runde Querschnittsfläche aufweist oder das Befestigungselement eine ovale Querschnittsfläche aufweist und die Aufnahmeöffnung rund ausgebildet ist, wobei der ovale und runde Konturverlauf der Aufnahmeöffnung vorzugsweise mindestens eine Aussparung bzw. Ausnahme aufweist.

Der Handhebel zur Betätigung eines Ventils vorzugsweise einer Absperrklappe oder eines Kugelhahns ist vorzugsweise aus Kunststoff ausgebildet. Der Handhebel kann auch für andere Ventile eingesetzt werden jedoch bevorzugt für solche die einen 90° Betätigungswinkel aufweisen, wobei der Handhebel auch für solche mit einem Betätigungswinkel von 180° oder sogar bis zu 360° funktionieren würde.

Der Handhebel wird meist dann an einem Ventil vorgesehen, wenn es zur Betätigung einen höheren Kraftaufwand bedarf.

Der erfindungsgemässe Handhebel weist einen Hebel auf, der ein Feststellelement und ein Hebeloberteil beinhaltet. Vorzugsweise sind sowohl Hebeloberteil wie Feststellelement aus Kunststoff. In einer bevorzugten Hebelausgestaltung weist das Feststellelement und auch das Hebeloberteil ein Lagerungselement auf, wodurch das Feststellelement im Hebeloberteil beweglich gelagert ist. Selbstverständlich wäre eine umgekehrte Anordnung der Lagerung auch denkbar. Dadurch wird erreicht, dass der vordere Bereich des Feststellelements sich vom Hebeloberteil distanziert während des Betätigens bzw. des Zusammenpressens des Hebeloberteils und Feststellelements im hinteren Bereich, wodurch die an der Stirnfläche des Feststellelements angeordnete Verzahnung sich aus der korrespondierenden Verzahnung am Aussenumfang der Rastscheibe löst und so eine Verstellung des Hebels bzw. des Abschlusskörpers des Ventils ermöglicht wird, wodurch die Durchflussmenge reguliert wird.

Vorzugsweise ist zwischen dem Hebeloberteil und dem Feststellelement ein federndes Element angeordnet, welches dafür sorgt, dass bei Nichtbetätigung des Hebels die Verzahnung des Feststellelements mit der Feststellplatte greift und das Feststellelement sich nicht ohne Betätigung des Hebels aus der Verzahnung lösen kann.

Als alternative Ausgestaltung des Handhebels besteht auch die Möglichkeit einer Verstellung des Hebels bzw. des Abschlusskörpers ohne Rasterung, so dass jede Position eingestellt werden kann. Dies wird durch das Feststellelement ermöglicht welches am Hebeloberteil angeordnet ist und das Hebeloberteil mit der Feststellplatte verspannt, beispielsweise mittels Feststellschraube die am Feststellelement angeordnet ist.

Der Handhebel weist eine Feststellplatte, vorzugsweise aus Kunststoff auf, wobei das am Hebeloberteil angeordnete Befestigungselement zur Verbindung mit der Feststellplatte dient. Zudem wird das Hebeloberteil bzw. das Befestigungselement mit dem Ventil bzw. mit der Drehachse des Abschlusskörpers verbunden, vorzugsweise über eine formschlüssige Verbindung wie beispielsweise über einen Mehrkant. Zur Verbindung des Befestigungselements mit der Feststellplatte weist die Feststellplatte, die als Scheibe ausgebildet ist, eine Aufnahmeöffnung auf, die in der Mitte angeordnet ist. Durch einen ovalen Konturverlauf der Aufnahmeöffnung kann das Befestigungselement, welches eine runde Querschnittsfläche und vorzugsweise eine zylinderförmige Ausgestaltung aufweist hindurchgesteckt werden oder der Konturverlauf der Aufnahmeöffnung ist rund ausgebildet und das Befestigungselement weisst eine ovale Querschnittsfläche auf die ebenfalls zylindrisch ausgestaltet ist. Es befindet sich im Konturverlauf der Aufnahmeöffnung mindestens eine Aussparung bzw. Ausnahme die das Montieren und Verriegeln des Befestigungselements ermöglichen.

Das Befestigungselement ist zylindrisch ausgebildet und weist mindestens eine Nocke auf, wobei die Nocke mit der in der Aufnahmeöffnung vorgesehenen Aussparung korrespondiert und so einfach montierbar ist.

Als bevorzugte Ausführungsform weist das Befestigungselement mindestens zwei Nocken auf, die vorzugsweise 45° - 180° zueinander versetzt angeordnet sind, speziell bevorzug sind die Nocken sich gegenüberliegen angeordnet.

Eine solche Anordnung ermöglicht, dass die Nocken auch als Begrenzung der Drehbewegung dienen und am Anschlag der Feststellplatte anstehen, wenn das Ventil komplett geöffnet oder geschlossen ist.

Eine bevorzugte Ausführungsform ist, dass der ovale Konturverlauf der Aufnahmeöffnung durch zwei Kreiskonturen gebildet wird, die exzentrisch zueinander angeordnet sind. Dadurch wird ermöglicht, dass das Befestigungselement nur in einer Position bzw. Ausrichtung mit der Feststellplatte montiert werden kann und durch eine Verdrehung und Verschiebung des Befestigungselements in der Aufnahmeöffnung der Feststellplatte gewährleistet ist, dass das Hebeloberteil sich nicht ohne Lösen der Feststellplatte vom Ventil, welches mit dem Ventilgehäuse verschraubt wurde, lösen lässt.

Vorteilhaft ist es, wenn der ovale Konturverlauf als Langloch ausgebildet ist. Die Kreiskonturen sind vorzugsweise entlang einer gemeinsamen Achse beabstandet voneinander angeordnet.

Es hat sich auch als vorteilhaft erwiesen, wenn die Kreiskonturen denselben Radius aufweisen, dies vereinfacht die Montage des Befestigungselements.

Gemäss einer bevorzugten Ausführungsform weist die Feststellplatte mindestens einen Anschlag auf, welcher im Bereich der Aufnahmeöffnung angeordnet ist und vorzugsweise mit der Nocke am Befestigungselement korrespondiert und dadurch die Hebelrotation begrenzt wird. Entsprechend der Position des Anschlags kann der Rotationswinkel definiert werden der mit dem Handhebel möglich sein soll.

Durch die Anordnung mindestens eines Anschlags an der Feststellplatte können hervorstehende Begrenzungsmittel oder Schraubenköpfe die eine Verletzungsgefahr darstellen vermieden werden. Vorzugsweise ist der Anschlag einstückig mit der Feststellplatte ausgebildet bzw. integral an der Feststellplatte angeordnet.

Als besonders bevorzug hat sich gezeigt, wenn zwei Anschläge zur Rotationsbewegung an der Feststellplatte angeordnet sind, vorzugsweise begrenzt der eine Anschlag den maximal offenen Zustand des Ventils und der andere den komplett geschlossenen Zustand des Ventils. Vorteilhaft ist es, wenn der eine Anschlag mit der einen Nocke zur Begrenzung der Rotationsbewegung korrespondiert und der andere Anschlag mit der anderen Nocke zur Begrenzung der Rotationsbewegung.

Um eine stufenweise Verstellung der Durchlassöffnung des Ventils zu ermöglichen weist die Feststellplatte vorzugsweise an dessen Aussenumfang eine Verzahnung auf, mit der die Verzahnung an der Stirnseite des Feststellelements korrespondiert. Vorteilhaft ist es wenn die Verzahnung nur über einen Kreissegmentbereich des Aussenumfangs der Feststellplatte angeordnet ist. Eine Verzahnung ist nur soweit nötig über den Aussenumfang anzuordnen wie auch der Betätigungswinkel des Ventils ist.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Explosionsdarstellung eines erfindungsgemässen Handhebels,
- Fig. 2: einen Längsschnitt eines erfindungsgemässen Handhebels,
- Fig. 3: eine Ansicht von unten des erfindungsgemässen Handhebels während des Einführens des Befestigungselements in die Feststellplatte,
- Fig. 4: eine Ansicht von unten des erfindungsgemässen Handhebels mit der Feststellplatte verrastet,
- Fig. 5: eine Ansicht von unten des erfindungsgemässen Handhebels bereits verdreht,
- Fig. 6: eine Draufsicht einer Feststellplatte,
- Fig. 7.: ein Ausschnitt eines erfindungsgemässen Hebels mit einem Befestigungselement das eine ovale Querschnittsfläche aufweist und
- Fig. 8: eine Explosionsdarstellung eines erfindungsgemässen Handhebels mit einem Hebel in einer weiteren Ausführungsform

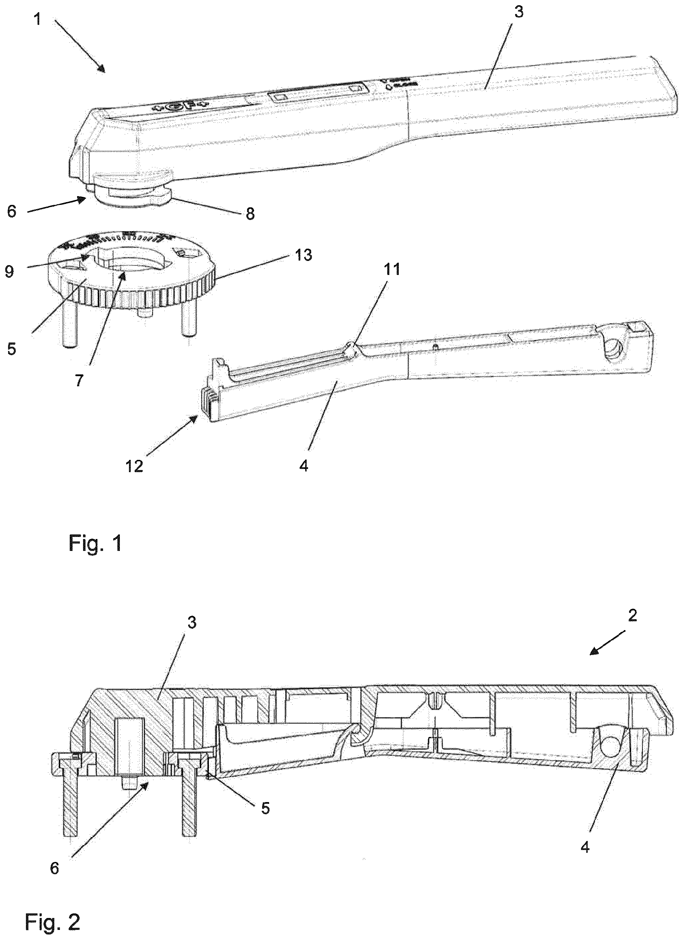

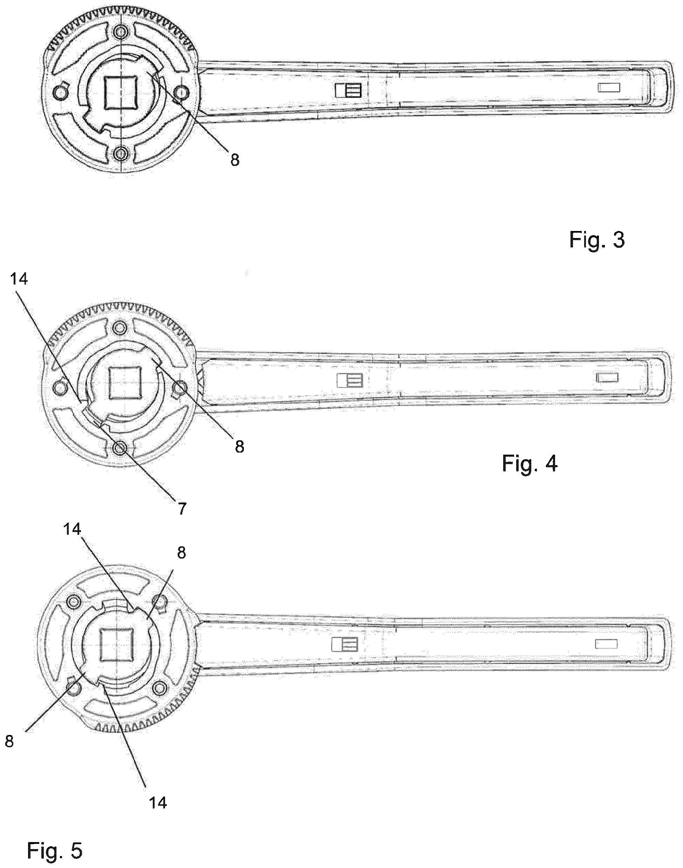

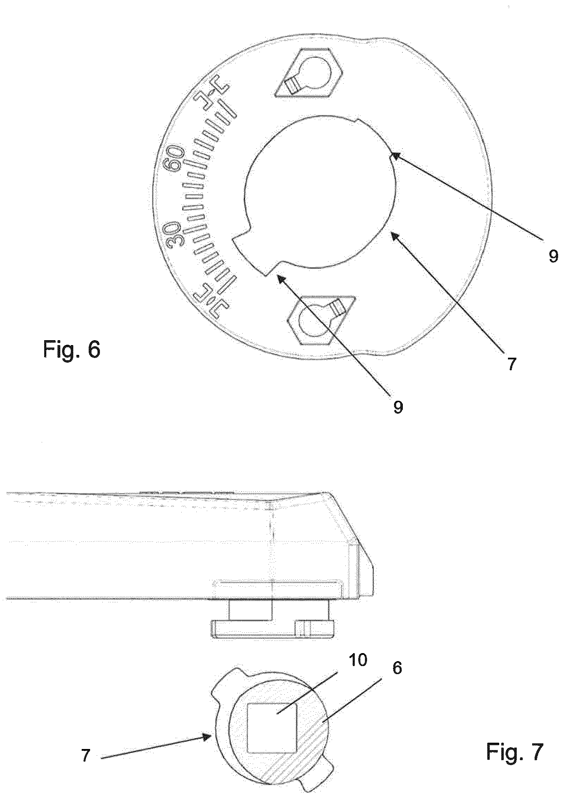

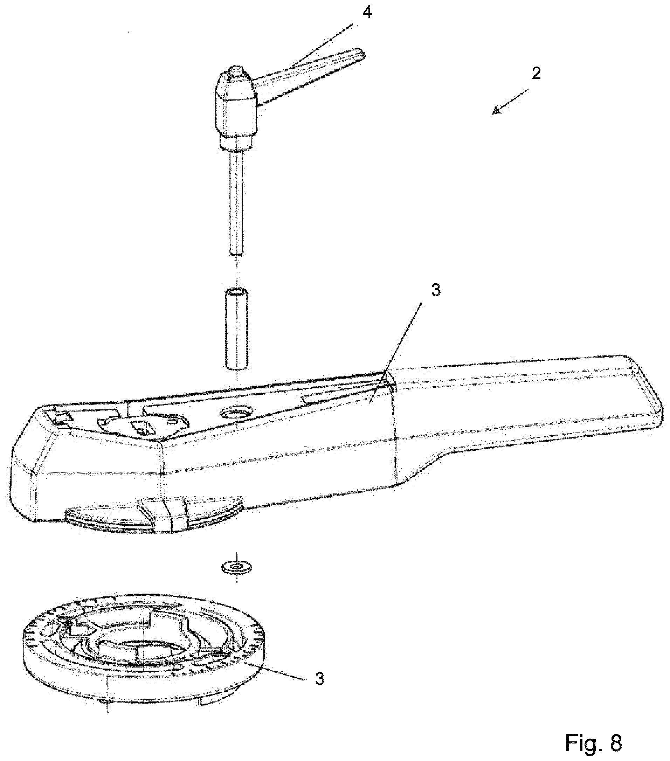

Fig. 1 zeigt einen erfindungsgemässen Handhebel 1 in einer Explosionsansicht. Der Handhebel 1 weist einen Hebel 2 auf, der ein Hebeloberteil 3 und ein Feststellelement 4 beinhaltet, vorzugsweise sind das Oberteil wie das Feststellelement 4 aus Kunststoff hergestellt. Alternativ wird in Fig. 8 eine weitere Ausführungsform eines erfindungsgemässen Handhebels 1 aufgezeigt, wobei das Feststellelement 4 als Hebel ausgebildet ist und so eine Feststellung des Handhebels 1 erlaubt ohne Verrasterung sondern nur durch eine Klemmung an der Feststellplatte 5, beispielsweise mit einer Schraube und Mutter zur Fixierung. Zudem weist der Handhebel 1 eine Feststellplatte 5 auf die zur Aufnahme und Befestigung des Hebels 2 bzw. des Hebeloberteils 3 dient. Am vorderen Ende des Hebeloberteils 3 ist ein Befestigungselement 6 angeordnet, welches mit der Feststellplatte 5 verrastet wird. Das Befestigungselement 6 weist vorzugsweise eine zylindrische Form auf, wobei sich das Befestigungselement 6 durch die Aufnahmeöffnung 7 der Feststellplatte 5 hindurchstecken lässt und die vorzugsweise daran angeordneten Nocken 8 mit den vorzugsweise in der Aufnahmeöffnung 7 angeordneten Aussparungen bzw. Ausnahmen 9 korrespondieren, dies wird in Fig. 3 gezeigt. Das Befestigungselement 6 kann eine runde Querschnittsfläche aufweisen und mit einer Aufnahmeöffnung 7 korrespondieren die eine ovale Form aufweist wie in den Fig. 1-7 dargestellt oder alternativ, dass das Befestigungsmittel 6 eine ovale Querschnittsfläche aufweist und die korrespondierende Aufnahmeöffnung rund ausgebildet ist wie in Fig. 7 dargestellt. Dadurch, dass die Aufnahmeöffnung 7 einen ovalen Konturverlauf, vorzugsweise durch zwei Kreiskonturen gebildet die exzentrisch zueinander angeordnet sind, aufweist, wird das Befestigungselement 6 nachdem es durch die Feststellplatte 5 hindurchgesteckt wurde, exzentrisch verschoben damit die Nocke 7 an dem einen Anschlag 14 vorbeigedreht werden kann, wie in Fig. 3 und 4 ersichtlich, und dann wieder zurück verschoben werden kann, wie in Fig. 5 dargestellt, wobei dort bereits eine Drehung erfolgt ist. Aus Fig. 5 ist ersichtlich wie die eine Nocke 7 an dem einen Anschlag 14 ansteht der als Drehbegrenzung in eine Richtung dient sowie die andere Nocke 7 am anderen Anschlag 14 zur Begrenzung der Drehung in die andere Richtung dient. Durch diese Art der Montage des Befestigungselements 6 an der Feststellplatte 5 und der verschraubten Feststellplatte 5 mit dem Ventil (nicht dargestellt) kann sich der Hebel 2 nicht lösen.

Das Hebeloberteil 3 weist im Befestigungselement 6 zur Verbindung mit dem Ventil bzw. mit der Achse des Abschlusskörpers eine Aufnahme 10 auf, die vorzugsweise formschlüssig mit der Achse des Abschlusskörpers verbunden ist, wobei die Aufnahme 10 vorzugsweise als Mehrkant ausgebildet ist.

Als eine bevorzugte Ausgestaltung hat sich der Handhebel aus Fig. 1 gezeigt, wobei das Hebeloberteil 3 und Feststellelement 4 vorzugsweise über ein Lagerelement 11 miteinander verbunden sind. Vorteilhaft ist es, wenn das Feststellelement 4 im Oberteil 3 gelagert ist und durch ein Zusammenpressen des hinteren Bereiches des Hebeloberteils 3 und Feststellelements 4 sich die verzahnte Stirnfläche 12 des Feststellelements 4 absenkt und aus der Verzahnung der Feststellplatte 5 löst, was ein Rotieren des Hebels 2 ermöglicht und so das Ventil sich öffnen oder schliessen lässt. Diese Ausführungsform wird meist dann verwendet wenn eine Rasterung 13 benötigt wird, falls ein feineinstellbarer Handhebel 1 ohne Rasterung bevorzugt wird, wird die in Fig. 8 dargestellte Ausführungsform umgesetzt, in welcher der Hebel oberhalb des Hebeloberteils 3 als Feststellelement 4 dient.

Fig. 2 zeigt den Handhebel 1 im Längsschnitt worin das Lagerelement 11 der Hebel 3, 4 gut erkennbar ist. Um das Hebeloberteil 3 und das Feststellelement 4 im Normalzustand bzw. bei Nichtbetätigung gespannt zuhalten und die Verzahnung an der Stirnseite 12 des Feststellelements mit der Verzahnung 13 der Feststellplatte 5 im Eingriff zu halten, ist vorzugsweise ein Federelement (nicht dargestellt) zwischen dem Hebelober- und Unterteil eingebaut und sorgt für die Aufrechthaltung der Spannung.

Die am Befestigungselement 6 angeordnete Nocke 8 vorzugsweise Nocken 8 dienen neben der Funktion der Befestigung auch als Drehbewegungsbegrenzung. Die Nocken 8 dienen mit Hilfe mindestens eines Anschlags 14 der Begrenzung der Hebelrotationsbewegung, wobei der Anschlag 14 im Bereich der Aufnahmeöffnung 7 des Rastelelements 5 angeordnet ist, diese Funktion ist gut in den Fig. 4 und 5 zu erkennen. Selbstverständlich können auch zwei Anschläge 14 wie in den Figuren ersichtlich, angeordnet werden, wobei dann die eine Nocke 8 mit dem einen Anschlag 14 für eine Drehrichtung als Begrenzung dient und die andere Nocke 8 mit dem anderen Anschlag 14 für die Begrenzung in die andere Richtung.

Die Nocken 8 sowie die Aussparungen 7 durch die sie hindurchgesteckt werden sind derart codiert, dass kein falsches Montieren um 180° des Hebels möglich ist, dies wird vorzugsweise durch unterschiedliche Breiten der beiden Nocken 8 und Aussparungen 7 erreicht.

### Bezugszeichenliste

- 1: Handhebel
- 2: Hebel
- 3: Hebeloberteil
- 4: Feststellelement
- 5: Feststellplatte
- 6: Befestigungselement
- 7: Aufnahmeöffnung
- 8: Nocke
- 9: Ausnahme / Aussparung
- 10: Aufnahme
- 11: Lagerelement
- 12: Stirnfläche verzahnt
- 13: Verzahnung Feststellplatte
- 14: Anschlag

## Patentansprüche

1. Handhebel (1) vorzugsweise aus Kunststoff zum Betätigen eines Ventils vorzugsweise einer Absperrklappe oder eines Kugelhahns enthaltend einen Hebel (2) und eine Feststellplatte (5), wobei der Hebel (2) ein Feststellelement (4) und ein Hebeloberteil (3) aufweist, wobei am Hebeloberteil (3) ein Befestigungselement (6) zur Befestigung an einem Ventil und zur Verbindung mit der Feststellplatte (5) angeordnet ist und die Feststellplatte (5) eine Aufnahmeöffnung (7) zur Aufnahme des Befestigungselements (6) aufweist, **dadurch gekennzeichnet, dass** die Aufnahmeöffnung (7) oval ausgebildet ist und das Befestigungselement (6) eine runde Querschnittsfläche aufweist oder das Befestigungselement (6) eine ovale Querschnittsfläche aufweist und die Aufnahmeöffnung (7) rund ausgebildet ist, wobei der ovale oder runde Konturverlauf der Aufnahmeöffnung (7) mindestens eine Aussparung bzw. Ausnahme (9) aufweist, wobei das Befestigungselement (6) eine zylindrische Form aufweist, wobei am Befestigungselement (6) mindestens eine Nocke (8) zur Verrasterung mit der Feststellplatte (5) angeordnet ist.

2. Handhebel (1) nach Anspruch 1, **dadurch gekennzeichnet, dass** mindestens zwei Nocken (8) am Befestigungselement (6) angeordnet sind und diese vorzugsweise 45°- 180° zueinander versetzt angeordnet sind.

3. Handhebel (1) nach Anspruch 2, **dadurch gekennzeichnet, dass** die Nocken (8) sich gegenüber liegen.

4. Handhebel (1) nach Anspruch 1, **dadurch gekennzeichnet, dass** der ovale Konturverlauf der Aufnahmeöffnung (7) durch zwei Kreiskonturen gebildet ist die exzentrisch zueinander angeordnet sind.

5. Handhebel (1) nach Anspruch 1 oder 4, **dadurch gekennzeichnet, dass** der ovale Konturverlauf als Langloch ausgebildet ist.

6. Handhebel (1) nach einem der Ansprüche 4 oder 5, **dadurch gekennzeichnet dass**, die beiden Kreiskonturen denselben Radius aufweisen.

7. Handhebel (1) nach Anspruch 1, **dadurch gekennzeichnet, dass** die Feststellplatte (5) mindestens einen Anschlag (14) im Bereich der Aufnahmeöffnung (7) zur Begrenzung der Hebelrotation aufweist.

8. Handhebel (1) nach Anspruch 7, **dadurch gekennzeichnet, dass** die Feststellplatte (5) mindestens zwei Anschläge (14) im Bereich der Aufnahmeöffnung zur Begrenzung der Hebelrotation aufweist, vorzugsweise begrenzt der eine Anschlag (14) den maximal offenen Zustand des Ventils und der andere den komplett geschlossenen Zustand des Ventils.

9. Handhebel nach einem der vorangehenden Ansprüche, **dadurch gekennzeichnet, dass** die Feststellplatte am Aussenumfang eine Verzahnung aufweist, wobei die Verzahnung vorzugsweise über einen Kreissegmentbereich des Aussenumfangs angeordnet ist.

## Claims

1. Hand lever (1) preferably made of plastic, for operating a valve, preferably a shut-off valve or a ball valve, containing a lever (2) and a locking plate (5), wherein the lever (2) comprises a locking element (4) and a lever upper part (3), wherein a fastening element (6) for fastening to the valve and for connecting to the locking plate (5) is arranged on the lever upper part (3), and the locking plate (5) has a receiving opening (7) for receiving the fastening element (6), **characterized in that** the receiving opening (7) is oval and the fastening element (6) has a round cross-sectional surface or the fastening element (6) has an oval cross-sectional surface and the receiving opening (7) is round, wherein the oval or round contour of the receiving opening (7) has at least one recess or cutout (9), wherein the fastening element 2 is cylindrical, wherein at least one cam (8) for engaging with the locking plate (5) is arranged on the fastening element (6).

2. Hand lever (1) according to Claim 1, **characterized in that** at least two cams (8) are arranged on the fastening element (6) and are preferably arranged at an angle of 45° - 180° to one another.

3. Hand lever (1) according to Claim 2, **characterized in that** the cams (8) are positioned opposite one another.

4. Hand lever (1) according to Claim 1, **characterized in that** the oval contour of the receiving opening (7) is formed by two circular contours arranged eccentrically to one another.

5. Hand lever (1) according to Claim 1 or 4, **characterized in that** the oval contour is designed as a slot.

6. Hand lever (1) according to any one of Claims 4 or 5, **characterized in that** the two circular contours have the same radius.

7. Hand lever (1) according to Claim 1, **characterized in that** the locking plate (5) has at least one stop (14) in the region of the receiving opening for limiting the lever rotation.

8. Hand lever (1) according to Claim 7, **characterized in that** the locking plate (5) has at least two stops (14) in the region of the receiving opening for limiting the lever rotation, the one stop (14) preferably limits the fully open state of the valve and the other the completely closed state of the valve.

9. Hand lever according to any one of the preceding claims, **characterized in that** the locking plate has toothing on its outer circumference, wherein the toothing is preferably arranged over a circular segment region of the outer circumference.

## Revendications

1. Levier à main (1) de préférence en matière synthétique, servant à l'actionnement d'une vanne, de préférence d'un clapet d'arrêt ou d'un robinet à boisseau sphérique, comportant un levier (2) et une plaque de blocage (5), le levier (2) présentant un élément de blocage (4) et une partie supérieure de levier (3), un élément de fixation (6) servant à la fixation à une vanne et à la liaison à la plaque de blocage (5) étant disposé sur la partie supérieure de levier (3) et la plaque de blocage (5) présentant une ouverture de réception (7) servant à la réception de l'élément de fixation (6), **caractérisé en ce que** l'ouverture de réception (7) est de forme ovale et l'élément de fixation (6) présente une surface en section transversale ronde ou l'élément de fixation (6) présente une surface en section transversale ovale et l'ouverture de réception (7) est de forme ronde, l'allure de contour ovale ou ronde de l'ouverture de réception (7) présentant au moins un évidement ou une fente (9), l'élément de fixation (6) présentant une forme cylindrique, au moins une came (8) destinée à être verrouillée avec la plaque de blocage (5) étant disposée sur l'élément de fixation (6).

2. Levier à main (1) selon la revendication 1, **caractérisé en ce qu'**au moins deux cames (8) sont disposées sur l'élément de fixation (6) et celles-ci sont disposées de manière décalée les unes par rapport aux autres de préférence de 45° à 180°.

3. Levier à main (1) selon la revendication 2, **caractérisé en ce que** les cames (8) sont opposées les unes aux autres.

4. Levier à main (1) selon la revendication 1, **caractérisé en ce que** l'allure de contour ovale de l'ouverture de réception (7) est formée par deux contours circulaires qui sont disposés de manière excentrique l'un par rapport à l'autre.

5. Levier à main (1) selon la revendication 1 ou 4, **caractérisé en ce que** l'allure de contour ovale est réalisée sous forme de trou oblong.

6. Levier à main (1) selon l'une des revendications 4 ou 5, **caractérisé en ce que** les deux contours circulaires présentent le même rayon.

7. Levier à main (1) selon la revendication 1, **caractérisé en ce que** la plaque de blocage (5) présente au moins une butée (14) dans la région de l'ouverture de réception (7) pour la limitation de la rotation du levier.

8. Levier à main (1) selon la revendication 7, **caractérisé en ce que** la plaque de blocage (5) présente au moins deux butées (14) dans la région de l'ouverture de réception pour la limitation de la rotation du levier, de préférence l'une des butées (14) limite l'état ouvert au maximum de la vanne et l'autre limite l'état complètement fermé de la vanne.

9. Levier à main selon l'une des revendications précédentes, **caractérisé en ce que** la plaque de blocage présente une denture au niveau de la périphérie extérieure, la denture étant disposée de préférence sur une région de segment de cercle de la périphérie extérieure.
